# EUROPEAN PATENT SPECIFICATION

(11) **EP 4 177 847 B1**
(45) Date of publication and mention of the grant of the patent: **23.07.2025**
(21) Application number: 22205129.4
(22) Date of filing: 02.11.2022
(51) Int. Cl.: G06V 10/75, G01F 23/02, G01F 23/292, G01N 15/04

(54) **SYSTEM FOR AUTOMATIC MEASUREMENT OF THE SEDIMENTATION SPEED AND THE MUD VOLUME**
SYSTEM ZUR AUTOMATISCHEN MESSUNG DER SEDIMENTATIONSGESCHWINDIGKEIT UND DES SCHLAMMVOLUMENS
SYSTÈME DE MESURE AUTOMATIQUE DE LA VITESSE DE SÉDIMENTATION ET DU VOLUME DE BOUE

(30) Priority: 04.11.2021 IT 202100028064
(43) Date of publication of application: 10.05.2023
(73) Proprietor: Ventura, Arcangelo, 25127 Brescia (IT)
(72) Inventor: VENTURA, Arcangelo, 25127 BRESCIA (IT); VENTURA, Davide, 25127 BRESCIA (IT); VENTURA, Carlo, 25132 BRESCIA (IT)
(74) Representative: Modiano, Micaela Nadia

(56) References cited:
- CN-A- 111 796 552
- CN-A- 112 229 770
- CN-A- 114 882 031
- US-A1- 2014 020 457

## Description

The present invention relates to a system for the automatic measurement of the settling rate and of the volume of settled sludge present in purifying treatments, in particular for biological purification plants or the like.

As is known, monitoring of activated sludge purifiers is performed by measuring the functional parameters of the individual compartments of the plant and of the apparatuses that make up the plant.

Generally, the measurement is performed via:
- measuring functional data: pH, temperature, conductivity, dissolved oxygen, hours of operation of pumps, hours of aeration, volume of sludge in 11/30' cone;
- retrieving sludge samples: under aeration for examination under a microscope, measurement of dry content (SSA), under recirculation to determine dry content (SSR).

The parameters measured and calculated provide other data, for example the Mohlman index, recirculation ratio, sludge load (with input analyses), and settling solid load.

Furthermore, the occasional retrieval of samples at the input point and at the outlet point makes it possible to determine the input load, its biodegradability, the purifying efficiencies and most of all whether the output parameters meet regulatory standards.

EP0634654B1, in the name of Arcangelo Ventura, describes a device for monitoring the quality of purified water, particularly for biological purification plants and the like, which comprises means for measuring water clarity, reading means adapted to generate a signal proportional to the clarity of the water to be monitored, and which is characterized in that it further comprises control means adapted to establish the percentage reliability of the quantity of harmful substances in the water to be monitored, as a function of the measured clarity value.

It should be noted that the settling of sludge entails a separation of the sludge into a solid fraction, typically called settled sludge, and a liquid fraction.

Furthermore, the settling of the sludge represents one of the most important stages of the purification treatment and is characterized by two parameters that need to be monitored: the settling rate (Vsed [m/h]) and the volume of settled sludge (Vf [cm³/l]). Typically, the volume of settled sludge is measured after 30 minutes in a 1000 cm³ container (Vf30).

It is in this final stage that the result of the treatment upstream is obtained, i.e. the subdivision between the purified water and the sludge containing the pollutants.

The Vsed parameter indicates to the operator whether the sludge settles properly or whether it is necessary to add substances to speed up its settling.

The Vf30 parameter gives the quantity in terms of volume of settled sludge present in the purification treatment, and indicates to the operator when to dispose of the sludge. The volume of settled sludge Vf30 with the laboratory figure for the dry content of the sludge at 105°C gives the further Mohlman index of the settling characteristics of the sludge.

Furthermore, the importance of the two parameters (Vsed and Vf30), in addition to being operational, is also economical, since the treatment and disposal of the sludge on average represents over 30% of the running costs of the purification plant.

Currently, determining the settling rate Vsed and the volume of settled sludge Vf30 is done with manual methods, typically in a laboratory for the Vsed parameter and on-site for the Vf30 parameter, generally with standardized procedures.

CN 111796552 discloses a system as defined in the preamble of claim 1.

The aim of the present invention is to provide a system for the automatic measurement of the settling rate and of the volume of settled sludge that is capable of improving the known art in one or more of the above mentioned aspects.

Within this aim, an object of the invention is to make available a system for the automatic measurement of the settling rate and of the volume of settled sludge that can automatically perform the measurement of the settling rate Vsed and of the volume of settled sludge Vf30.

Another object of the invention is to develop a system for the automatic measurement of the settling rate and of the volume of settled sludge, which is such as to ensure measurements that are precise and, especially, repeatable with respect to those currently obtained which, being performed at least partially on-site, present high variability owing to the objective difficulty of performing the measurements.

Another object of the invention is to provide a system for the automatic measurement of the settling rate and of the volume of settled sludge that is highly reliable, easily and practically implemented, and economically competitive when compared to the known art.

This aim and these and other objects which will become more apparent hereinafter are achieved by a system for the automatic measurement of the settling rate and of the volume of settled sludge according to claim 1, optionally provided with one or more of the characteristics of the dependent claims.

Further characteristics and advantages of the invention will become more apparent from the description of a preferred, but not exclusive, embodiment of the system for the automatic measurement of the settling rate and of the volume of settled sludge according to the invention, which is illustrated for the purposes of non-limiting example in the accompanying drawings wherein:
Figure 1 is a block diagram that schematically illustrates an embodiment of the system according to the invention;
Figure 2 is an image, acquired at a moment in time t1, of a body containing the sludge to be treated by the system according to the invention;
Figure 3 is an image, acquired at a moment in time t2, of the body containing the sludge to be treated by the system according to the invention;
Figure 4 is an image, acquired at a moment in time t3, of the body containing the sludge to be treated by the system according to the invention.

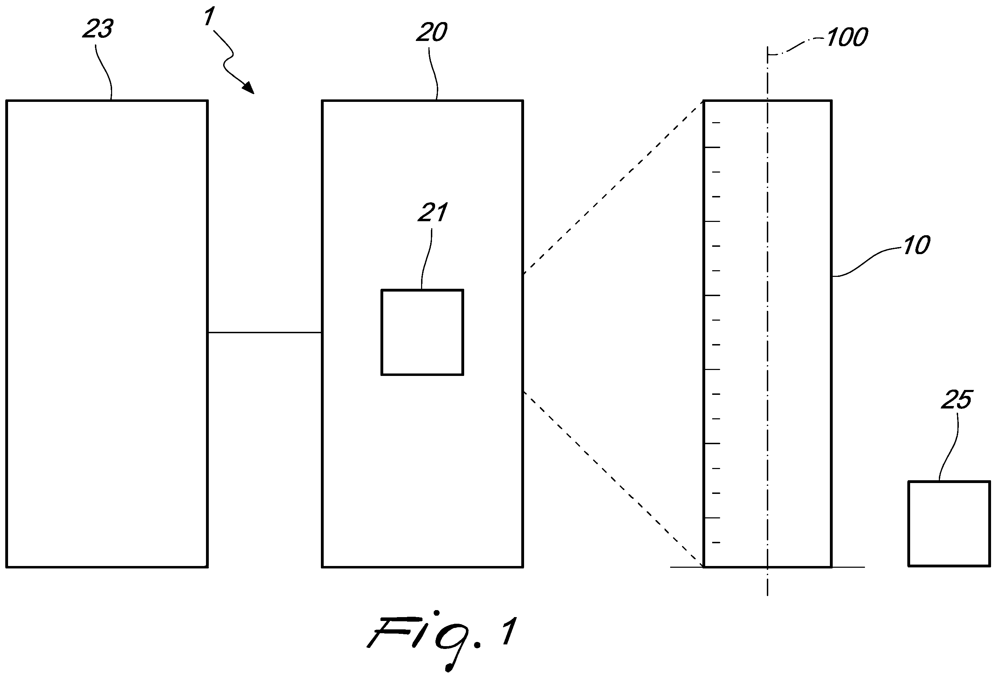

With reference to Figure 1, the system according to the invention, generally designated by the reference numeral 1, is a system for the automatic measurement of the settling rate and of the volume of settled sludge present in purifying treatments, in particular for biological purification plants or the like.

The system 1 according to the invention comprises a device 25 for drawing and sending, which is configured to retrieve a predefined quantity of sludge to be treated and send it to a containment body 10.

Preferably, the device 25 for drawing and sending comprises a peristaltic pump.

The containment body 10 has a longitudinal extension along a substantially vertical axis 100. The containment body 10 can be comprised in the system 1 according to the invention.

Preferably, the containment body 10 comprises a graduated scale, for example printed on an external surface of the containment body 10 itself. This graduated scale can be indicative of a volume inside the containment body 10, for example from 0 cm³ to 1000 cm³.

Preferably, the containment body 10 has a cylindrical extension around the vertical axis 100. Preferably, the containment body 10 is transparent, i.e. made of transparent material.

The system 1 according to the invention further comprises an image acquisition device 20, configured to acquire a plurality of digital images of the containment body 10 containing the sludge to be treated at a respective plurality of moments in time t1, t2, t3 after the sending of the sludge to be treated to the containment body 10.

In other words, the image acquisition device 20 is configured to acquire a digital image of the containment body 10 at each one of the moments in time t1, t2, t3.

Advantageously, to this end, the image acquisition device 20 is associated with, or positioned proximate to, the containment body 10 containing the sludge to be treated.

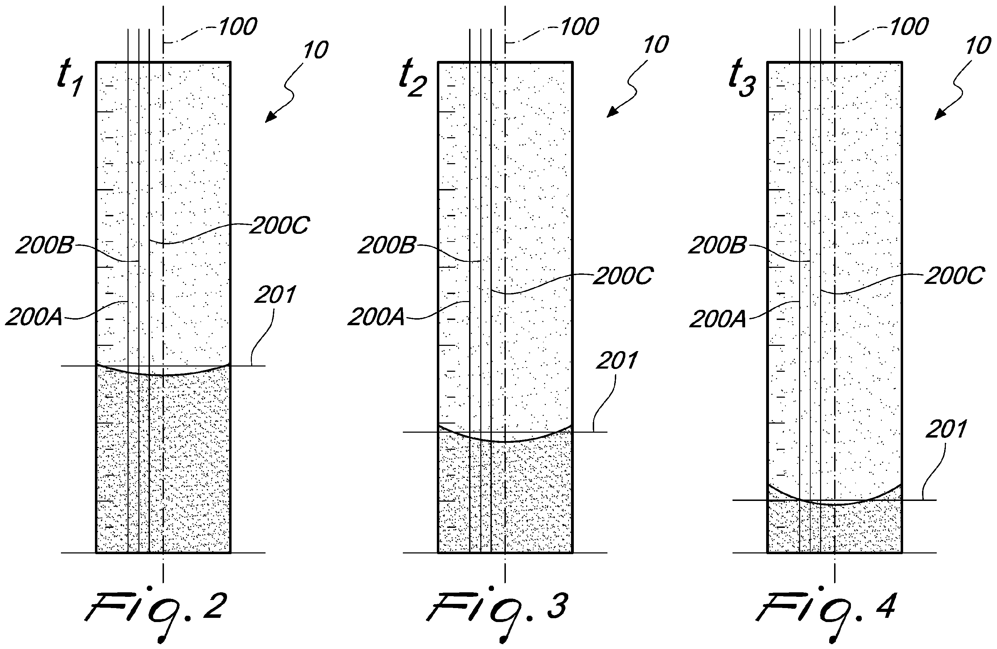

In an embodiment, the plurality of moments in time can comprise three moments in time t1, t2 and t3, which are discussed in relation to Figures 2, 3 and 4, respectively.

The image acquisition device 20 comprises a video camera device 21, which is adapted to acquire respective digital images, for example photographic or infrared images, of the containment body 10 containing the sludge to be treated at the above mentioned moments in time t1, t2, t3.

The system 1 according to the invention further comprises a processing device 23. The image acquisition device 20 is configured to send the acquired digital images to the processing device 23.

Preferably, the processing device 23 can be of the local type. Alternatively, the processing device 23 can be of the remote type.

The processing device 23 is configured to extract at least two columns of pixels from each one of the digital images of the containment body 10 containing the sludge to be treated.

Preferably, the processing device 23 is configured to extract at least three columns of pixels from each one of the digital images.

Furthermore, the processing device 23 is configured to identify a variation in light intensity of the pixels, for each one of the at least two (preferably three) extracted columns of pixels 200, in order to detect an interface point between the settled sludge and the liquid fraction of the sludge along the respective column of pixels 200.

Advantageously, to this end, the video camera device 21 is oriented with respect to the containment body 10 so that each one of the extracted columns of pixels 200 is substantially aligned with, in particular parallel to, the above mentioned axis 100 of the containment body 10.

Advantageously, the processing device 23 is configured to identify the variation in light intensity of these pixels in order to detect the interface point using adapted mathematical digital filters.

Furthermore, the processing device 23 is configured to determine an average value 201 of a level of the settled sludge inside the containment body 10, on the basis of the interface points detected along the at least two (preferably three) columns of pixels 200, at each one of the moments in time t1, t2 and t3. Basically, each moment in time t1, t2 and t3 presents a respective average value 201 of the level of settled sludge.

In particular, for each one of the moments in time t1, t2 and t3, the processing device 23 is configured to measure the height of the level of settled sludge along each one of the columns of pixels 200, and then to calculate the average value 201 of the various measured heights.

The height of the level of settled sludge can be measured on the basis of the number and characteristics of the pixels comprised between the bottom of the containment body 10 and the interface point detected previously.

Finally, the processing device 23 is configured to determine the settling rate Vsed and the volume of settled sludge Vf at a predetermined moment in time (for example t3) of the plurality of moments in time, using known calculation formulas and on the basis of the average values 201 determined at the plurality of moments in time t1, t2 and t3.

Advantageously, the above mentioned predetermined moment in time is the last moment in time t3 comprised in the plurality of moments in time t1, t2 and t3.

In a preferred embodiment, the processing device 23 is a programmable logic controller (PLC). Conveniently, the various functionalities of the processing device 23 can be implemented in respective modules of the controller.

Conveniently, the image acquisition device 20 is functionally connected to the processing device 23, and vice versa.

Either or both of the image acquisition device 20 and the processing device 23 can comprise means for setting the sensitivity of the digital images, for example mathematical digital filters. The image acquisition device 20 can comprise means for controlling the exposure of the video camera 21. Where present, these means for setting the sensitivity and/or these means for controlling the exposure enable an improvement of the quality of the digital images acquired.

Advantageously, the processing device 23 can further be configured to correct a distortion of the digital images acquired and originating from the image acquisition device 20, in particular by way of an adapted mathematical function, preferably a third-degree mathematical function, that makes it possible to obtain the average value 201 of the sludge level starting from the columns of pixels 200.

Specifically, the processing device 23 can be configured to compensate by enlarging central portions of a specific digital image with respect to peripheral portions of that specific digital image, or by reducing peripheral portions of a specific digital image with respect to central portions of that specific digital image.

The central portions of the image correspond to the central portions of the containment body 10 and/or of the columns of pixels 200, while the peripheral portions of the image correspond to the end portions of the containment body 10 and/or of the columns of pixels 200.

This enlargement compensation is particularly advantageous during the acquisition of images that comprise the graduated scale of the containment body 10.

Conveniently, the device 25 for drawing and sending is functionally connected to the processing device 23, and vice versa.

The device 25 for drawing and sending can be adapted to send a volume of sludge to be treated equal to 1000 cm³ to the containment body 10, so that the processing device 23 can determine the settling rate Vsed and the volume of settled sludge Vf at the predetermined moment in time (for example t3), using known calculation formulas and on the basis of the average values 201 determined at the plurality of moments in time (for example t1, t2 and t3).

In fact, the settling rate Vsed is calculated by dividing the difference (for example in mm) between the average values at two specific moments in time of the above mentioned plurality of moments in time (for example at t2 and at t1) by the time difference (for example in minutes) between these two specific moments in time (for example, as mentioned, t2 and t1).

Advantageously, the moments in time t1, t2 and t3 correspond respectively to a length of time of 5, 15 and 30 minutes after the sending of the sludge to be treated to the containment body 10.

Conveniently, the volume of settled sludge Vf is calculated as Vf30, which corresponds to the quantity in terms of volume of settled sludge (for example out of 1000 cm³) at the predetermined moment in time t3, advantageously 30 minutes, after the sending of the sludge to be treated to the containment body 10.

Preferably, the system 1 according to the invention further comprises means for emptying the containment body 10.

The operation of the system 1 according to the invention is the following.

The device 25 for drawing and sending, in particular the peristaltic pump, draws a preset quantity (for example 1000 cm³) of sludge to be treated and sends it to the containment body 10.

At time t1 (preferably 5 minutes), t2 (preferably 15 minutes) and t3 (preferably 30 minutes), the video camera device 21 of the image acquisition device 20 acquires respective digital images of the containment body 10 inside which the sludge to be treated is present.

The processing device 23 extracts the at least two (preferably three) columns of pixels 200 from each one of the digital images of the containment body 10, and then identifies the variation in light intensity of the pixels in order to detect the interface point between the settled sludge and the liquid fraction of the sludge along each one of the extracted columns of pixels 200. Therefore, the above mentioned interface point is positioned along a respective column 200A, 200B or 200C of the extracted columns of pixels 200.

If necessary, the processing device 23 can correct the distortion of the digital images acquired and originating from the image acquisition device 20 at the ends of the graduated scale of the containment body 10. The correction can be done using an adapted mathematical function, preferably a third-degree mathematical function, implemented in the processing device 23.

Subsequently, the processing device 23 determines the average value 201 of the level of settled sludge inside the containment body 10, on the basis of the interface points detected along the columns of pixels 200, at each one of the moments in time t1, t2, and t3.

The average value 201 at the above mentioned predetermined moment in time t3 gives an accurate estimate of the volume of settled sludge Vf at the predetermined moment in time t3.

In this manner, both the settling rate Vsed and the volume of settled sludge Vf are therefore calculated at the predetermined moment in time (for example t3).

Some of the preferred embodiments described above are not necessarily mutually exclusive, nor are they necessarily mutually distinct. The preferred embodiments described above can be combined in order to provide further embodiments.

Any element, optionally all elements, of the preferred embodiments described above can be mutually combined in terms of configuration or function.

In practice it has been found that the invention fully achieves the intended aim and objects by providing a system 1 that is capable of operating automatically to measure the settling rate and the volume of settled sludge.

The measurements are extremely precise and, most of all, repeatable.

The system further operates without using reagents or other consumable material.

The detection cycle can be easily set or programmed.

The results can be easily saved and stored, without the operator needing to intervene.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (1) for the automatic measurement of the settling rate (Vsed) and of the volume of settled sludge (Vf) present in purifying treatments, comprising:
a device (25) for drawing and sending a predefined quantity of sludge to be treated from and to a containment body (10) which extends along a substantially vertical axis (100),
an image acquisition device (20), configured to acquire a plurality of digital images of said containment body (10) containing said sludge to be treated at a respective plurality of moments in time (t1, t2, t3) after the sending of said sludge to be treated to said containment body (10), said image acquisition device (20) comprising a video camera device (21) adapted to acquire said digital images of said containment body (10) containing said sludge to be treated in said moments in time (t1, t2, t3), and
a processing device (23), configured to:
- extract at least two columns of pixels (200) from each one of said digital images of said containment body (10) containing the sludge to be treated,
- identify a variation in light intensity of said pixels, for each one of said at least two extracted columns of pixels (200), in order to detect an interface point between the settled sludge and the liquid fraction of the sludge along the respective column of pixels (200), **characterized in that** the processing device (23) is also configured to:
- determine an average value (201) of a level of said settled sludge inside said containment body (10), on the basis of said interface points detected along said at least two columns of pixels (200), at each one of said moments in time (t1, t2, t3), and
- determine a settling rate (Vsed) and a volume of settled sludge (Vf) at a predetermined moment in time (t3) of said plurality of moments in time (t1, t2, t3), using known calculation formulas and on the basis of said average values (201) determined at said plurality of moments in time (t1, t2, t3).

2. The system (1) according to claim 1, **characterized in that** it further comprises said containment body (10).

3. The system (1) according to claim 1 or 2, **characterized in that** said containment body (10) has a cylindrical extension around said vertical axis (100).

4. The system (1) according to any one of the preceding claims, **characterized in that** said processing device (23) is configured to extract at least three columns of pixels (200) from each one of said digital images of said containment body (10) containing the sludge to be treated.

5. The system (1) according to any one of the preceding claims, **characterized in that** said processing device (23) is configured to identify said variation in light intensity of said pixels in order to detect said interface point using mathematical digital filters.

6. The system (1) according to any one of the preceding claims, **characterized in that** said processing device (23) comprises means for setting the sensitivity of said digital images.

7. The system (1) according to any one of the preceding claims, **characterized in that** said image acquisition device (20) comprises means for controlling the exposure of said video camera device (21).

8. The system (1) according to any one of the preceding claims, **characterized in that** said device (25) for drawing and sending comprises a peristaltic pump.

9. The system (1) according to any one of the preceding claims, **characterized in that** said predetermined moment in time (t3) corresponds to a time 30 minutes after the sending of said sludge to be treated to said containment body (10).

10. The system (1) according to any one of the preceding claims, **characterized in that** said plurality of moments in time (t1, t2, t3) comprises a first moment in time (t1) and a second moment in time (t2) which correspond respectively to a time 5 minutes after and to a time 15 minutes after the sending of said sludge to be treated to said containment body (10).

11. The system (1) according to any one of the preceding claims, **characterized in that** said processing device (23) is configured to determine said settling rate (Vsed) by dividing a difference between average values determined at two specific moments in time (t2, t1) of said plurality of moments in time (t1, t2, t3) by a time difference between said two specific moments in time (t2, t1).

12. The system (1) according to any one of the preceding claims, **characterized in that** said processing device (23) is configured to determine said volume of settled sludge (Vf) by calculating a quantity in terms of volume of settled sludge out of 1000 cm³ at said predetermined moment in time (t3).

## Patentansprüche

1. Ein System (1) zur automatischen Messung der Sedimentationsgeschwindigkeit (Vsed) und des Volumens sedimentierten Schlamms (Vf) in Klärbehandlungen, das Folgendes umfasst:
eine Vorrichtung (25) zum Entziehen und Überführen einer vordefinierten Menge zu behandelnden Schlamms von und an einen Behälterkörper (10), der sich entlang einer im Wesentlichen vertikalen Achse (100) erstreckt,
eine Bildaufnahmevorrichtung (20), ausgebildet, um eine Vielzahl digitaler Bilder des Behälterkörpers (10), der den zu behandelnden Schlamm enthält, nach dem Überführen des zu behandelnden Schlamms an den Behälterkörper (10) zu einer entsprechenden Vielzahl von Zeitpunkten (t1, t2, t3) aufzunehmen; wobei die Bildaufnahmevorrichtung (20) ein Videokameragerät (21) umfasst, ausgebildet, um die digitalen Bilder des Behälterkörpers (10), der den zu behandelnden Schlamm enthält, zu den Zeitpunkten (t1, t2, t3) aufzunehmen, und
eine Verarbeitungsvorrichtung (23), ausgebildet, um
- mindestens zwei Spalten von Pixeln (200) aus jedem der digitalen Bilder des Behälterkörpers (10) zu extrahieren, der den zu behandelnden Schlamm enthält,
- eine Veränderung der Lichtintensität der Pixel für jede der mindestens zwei extrahierten Spalten von Pixeln (200) zu bestimmen, um einen Grenzflächenpunkt zwischen dem sedimentierten Schlamm und der Flüssigfraktion des Schlamms entlang der jeweiligen Spalte von Pixeln (200) zu erfassen; **dadurch gekennzeichnet, dass** die Verarbeitungsvorrichtung (23) auch ausgebildet ist, um
- einen Durchschnittswert (201) einer Höhe des sedimentierten Schlamms in dem Behälterkörper (10) auf der Grundlage der Grenzflächenpunkte zu bestimmen, die entlang den mindestens zwei Spalten von Pixeln (200) zu jedem der Zeitpunkte (t1, t2, t3) erfasst wurden, und
- eine Sedimentationsgeschwindigkeit (Vsed) und ein Volumen sedimentierten Schlamms (Vf) zu einem vordefinierten Zeitpunkt (t3) der Vielzahl von Zeitpunkten (t1, t2, t3) mit Hilfe bekannter Berechnungsformeln und auf der Basis der Durchschnittswerte (201) zu bestimmen, die zu der Vielzahl von Zeitpunkten (t1, t2, t3) erfasst wurden.

2. Das System (1) gemäß Anspruch 1, **dadurch gekennzeichnet, dass** es weiter den Behälterkörper (10) umfasst.

3. Das System (1) gemäß Anspruch 1 oder 2, **dadurch gekennzeichnet, dass** der Behälterkörper (10) eine zylindrische Erstreckung um die vertikale Achse (100) herum hat.

4. Das System (1) gemäß einem beliebigen der obigen Ansprüche, **dadurch gekennzeichnet, dass** die Verarbeitungsvorrichtung (23) ausgebildet ist, um mindestens drei Spalten von Pixeln (200) aus jedem der digitalen Bilder des Behälterkörpers (10) zu extrahieren, der den zu behandelnden Schlamm enthält.

5. Das System (1) gemäß einem beliebigen der obigen Ansprüche, **dadurch gekennzeichnet, dass** die Verarbeitungsvorrichtung (23) ausgebildet ist, um die Veränderung der Lichtintensität der Pixel zu bestimmen, um den Grenzflächenpunkt mit Hilfe mathematischer Digitalfilter zu bestimmen.

6. Das System (1) gemäß einem beliebigen der obigen Ansprüche, **dadurch gekennzeichnet, dass** die Verarbeitungsvorrichtung (23) Mittel zum Einstellen der Empfindlichkeit der digitalen Bilder umfasst.

7. Das System (1) gemäß einem beliebigen der obigen Ansprüche, **dadurch gekennzeichnet, dass** die Bildaufnahmevorrichtung (20) Mittel zum Steuern der Belichtung des Videokamerageräts (21) umfasst.

8. Das System (1) gemäß einem beliebigen der obigen Ansprüche, **dadurch gekennzeichnet, dass** die Vorrichtung (25) zum Entziehen und Überführen eine peristaltische Pumpe umfasst.

9. Das System (1) gemäß einem beliebigen der obigen Ansprüche, **dadurch gekennzeichnet, dass** der vordefinierte Zeitpunkt (t3) einer Zeit 30 Minuten nach dem Überführen des zu behandelnden Schlamms an den Behälterkörper (10) entspricht.

10. Das System (1) gemäß einem beliebigen der obigen Ansprüche, **dadurch gekennzeichnet, dass** die Vielzahl von Zeitpunkten (t1, t2, t3) einen ersten Zeitpunkt (t1) und einen zweiten Zeitpunkt (t2) umfasst, welche einem Zeitpunkt 5 Minuten nach beziehungsweise einem Zeitpunkt 15 Minuten nach dem Überführen des zu behandelnden Schlamms an den Behälterkörper (10) entsprechen.

11. Das System (1) gemäß einem beliebigen der obigen Ansprüche, **dadurch gekennzeichnet, dass** die Verarbeitungsvorrichtung (23) ausgebildet ist, um die Sedimentationsgeschwindigkeit (Vsed) zu bestimmen durch Dividieren einer Differenz zwischen Durchschnittswerten, die zu zwei spezifischen Zeitpunkten (t2, t1) der Vielzahl von Zeitpunkten (t1, t2, t3) ermittelt wurden, durch eine Zeitdifferenz zwischen den zwei spezifischen Zeitpunkten (t2, t1).

12. Das System (1) gemäß einem beliebigen der obigen Ansprüche, **dadurch gekennzeichnet, dass** die Verarbeitungsvorrichtung (23) ausgebildet ist, um das Volumen des sedimentierten Schlamms (Vf) zu bestimmen durch Berechnen einer Quantität im Hinblick auf das Volumen sedimentierten Schlamms aus 1000 cm³ zu dem vordefinierten Zeitpunkt (t3).

## Revendications

1. Un système (1) pour la mesure automatique de la vitesse de sédimentation (Vsed) et du volume de boues sédimentées (Vf) présentes dans des traitements d'épuration, comprenant :
un dispositif (25) pour prélever et envoyer une quantité prédéfinie de boues à traiter depuis et vers un corps de confinement (10) qui s'étend le long d'un axe sensiblement vertical (100),
un dispositif d'acquisition d'images (20), configuré pour acquérir une pluralité d'images numériques dudit corps de confinement (10) contenant lesdites boues à traiter à une pluralité respective de moments dans le temps (t1, t2, t3) après l'envoi desdites boues à traiter vers ledit corps de confinement (10), ledit dispositif d'acquisition d'images (20) comprenant un dispositif de caméra vidéo (21) adapté pour acquérir lesdites images numériques dudit corps de confinement (10) contenant lesdites boues à traiter auxdits moments dans le temps (t1, t2, t3), et
un dispositif de traitement (23), configuré pour :
- extraire au moins deux colonnes de pixels (200) de chacune desdites images numériques dudit corps de confinement (10) contenant les boues à traiter,
- identifier une variation de l'intensité lumineuse desdits pixels, pour chacune desdites au moins deux colonnes de pixels extraites (200), afin de détecter un point d'interface entre les boues sédimentées et la fraction liquide des boues le long de la colonne de pixels respective (200), **caractérisé en ce que** le dispositif de traitement (23) est également configuré pour :
- déterminer une valeur moyenne (201) d'un niveau desdites boues sédimentées à l'intérieur dudit corps de confinement (10), sur la base desdits points d'interface détectés le long desdites au moins deux colonnes de pixels (200), à chacun desdits moments dans le temps (t1, t2, t3), et
- déterminer une vitesse de sédimentation (Vsed) et un volume de boues sédimentées (Vf) à un moment prédéterminé dans le temps (t3) parmi ladite pluralité de moments dans le temps (t1, t2, t3), à l'aide de formules de calcul connues et sur la base desdites valeurs moyennes (201) déterminées à ladite pluralité de moments dans le temps (t1, t2, t3).

2. Le système (1) selon la revendication 1, **caractérisé en ce qu'**il comprend en outre ledit corps de confinement (10).

3. Le système (1) selon la revendication 1 ou 2, **caractérisé en ce que** ledit corps de confinement (10) présente une extension cylindrique autour dudit axe vertical (100).

4. Le système (1) selon l'une quelconque des revendications précédentes, **caractérisé en ce que** ledit dispositif de traitement (23) est configuré pour extraire au moins trois colonnes de pixels (200) de chacune desdites images numériques dudit corps de confinement (10) contenant les boues à traiter.

5. Le système (1) selon l'une quelconque des revendications précédentes, **caractérisé en ce que** ledit dispositif de traitement (23) est configuré pour identifier ladite variation d'intensité lumineuse desdits pixels afin de détecter ledit point d'interface à l'aide de filtres numériques mathématiques.

6. Le système (1) selon l'une quelconque des revendications précédentes, **caractérisé en ce que** ledit dispositif de traitement (23) comprend des moyens pour régler la sensibilité desdites images numériques.

7. Le système (1) selon l'une quelconque des revendications précédentes, **caractérisé en ce que** ledit dispositif d'acquisition d'images (20) comprend des moyens pour contrôler l'exposition dudit dispositif de caméra vidéo (21).

8. Le système (1) selon l'une quelconque des revendications précédentes, **caractérisé en ce que** ledit dispositif (25) pour prélever et envoyer comprend une pompe péristaltique.

9. Le système (1) selon l'une quelconque des revendications précédentes, **caractérisé en ce que** ledit moment prédéterminé dans le temps (t3) correspond à un temps de 30 minutes après l'envoi desdites boues à traiter vers ledit corps de confinement (10).

10. Le système (1) selon l'une quelconque des revendications précédentes, **caractérisé en ce que** ladite pluralité de moments dans le temps (t1, t2, t3) comprend un premier moment dans le temps (t1) et un deuxième moment dans le temps (t2) qui correspondent respectivement à un temps de 5 minutes après et à un temps de 15 minutes après l'envoi desdites boues à traiter vers ledit corps de confinement (10).

11. Le système (1) selon l'une quelconque des revendications précédentes, **caractérisé en ce que** ledit dispositif de traitement (23) est configuré pour déterminer ladite vitesse de sédimentation (Vsed) en divisant une différence entre des valeurs moyennes déterminées à deux moments spécifiques (t2, t1) parmi ladite pluralité de moments dans le temps (t1, t2, t3) par une différence de temps entre lesdits deux moments spécifiques dans le temps (t2, t1).

12. Le système (1) selon l'une quelconque des revendications précédentes, **caractérisé en ce que** ledit dispositif de traitement (23) est configuré pour déterminer ledit volume de boues sédimentées (Vf) en calculant une quantité en termes de volume de boues sédimentées sur 1000 cm³ audit moment prédéterminé dans le temps (t3).
